# EUROPÄISCHE PATENTSCHRIFT

(11) **EP 2 650 238 B1**
(45) Veröffentlichungstag und Bekanntmachung des Hinweises auf die Patenterteilung: **04.03.2015**
(21) Anmeldenummer: 13163119.4
(22) Anmeldetag: 10.04.2013
(51) Int. Cl.: B65G 21/20, B29C 70/64, B29C 71/04, B29C 59/16

(54) **Vorrichtung zum Behandeln von Kunststoffbehältnissen mit reibungsreduzierenden Führungseinrichtungen**
Device for treating plastic containers with friction-reduced guide devices
Dispositif de traitement de récipients en plastique avec des guides à frottement réduit

(30) Priorität: 10.04.2012 DE 102012103080
(43) Veröffentlichungstag der Anmeldung: 16.10.2013
(73) Patentinhaber: Krones AG, 93073 Neutraubling (DE)
(72) Erfinder: Hüttner, Johann, 93073 Neutraubling (DE); Seger, Martin, 93073 Neutraubling (DE); Karl, Franz-Xaver, 93161 Sinzing (DE)
(74) Vertreter: Bittner, Bernhard

(56) Entgegenhaltungen:
- EP-A1- 2 404 832
- DE-A1- 3 701 915
- DE-A1- 10 119 809
- DE-A1-102005 010 886
- FR-A1- 2 772 365
- GB-A- 2 055 875
- JP-A- H05 132 043
- JP-A- 2001 151 085

## Beschreibung

Die vorliegende Erfindung bezieht sich auf eine Vorrichtung zum Behandeln von Kunststoffbehältnissen. Aus dem Stand der Technik sind vielfältige Vorrichtungen zum Behandeln von Kunststoffbehältnissen bekannt, wie beispielsweise Etikettiereinrichtungen, Fülleinrichtungen, Verpackungseinrichtungen, Verschließer, Blasformmaschinen und dergleichen. Bei sämtlichen dieser Vorrichtungen werden die Kunststoffvorformlinge, bzw. die Kunststoffbehältnisse zwischen einzelnen Aggregaten gefördert. Entlang dieser Förderungsstrecken sind dabei auch teilweise Führungseinrichtungen vorgesehen, welche bestimmte Bereiche der Kunststoffvorformlinge berühren, wie beispielsweise einen Mündungsbereich, einen Bodenbereich oder auch eine Seitenwandung.

Um andererseits bei der Herstellung der Kunststoffflaschen Kosten zu sparen, wird seit längerer Zeit das Gewicht der Kunststoffvorformlinge reduziert und daneben wird teilweise auch der Anteil von Recyclingmaterial in den Kunststoffvorformlingen ständig erhöht. Diese Sparmaßnahmen führen beim Blasen, bzw. beim Verstrecken der PET-Flaschen zu klebrigen Flaschen, also Behältnisse mit erhöhten Reibwerten, wodurch ein schlechtes Abgleiten untereinander erzeugt wird. Die gleiche Problematik kann auch beim Transportieren der Behältnisse zwischen den Behältnissen und Führungen, insbesondere Seitenführungen, welche aus Kunststoff bestehen, auftreten.

Überwiegend bei Hochleistungsanlagen werden durch diese Phänomene der Behältnisfluss verzögert und somit kommt es zu einem sogenannten Pumpeffekt. Dies wiederum führt zu Lücken, beispielsweise in einer Einteilschnecke und damit schlimmstenfalls zu einem Stillstand der Anlage. Ähnliche Probleme können auch bei Gassenführungen in einem Luft- oder Gebindetransporteur entstehen. In einem Lufttransporteur bleiben gelegentlich die Behältnisse an einem Geländer kleben. Versuche mit anderen Materialien, wie zum Beispiel Metall, PA, POM usw. scheiterten bisher am Reibwert der Behältnisse zu den PE-Flaschen.

Aus der EP 2 404 832 A1 ist ein Geländer für eine Einrichtung zum Transportieren von PET-Flaschen bekannt. Dabei trägt das Geländer einen Führungseinsatz und eine den PET-Flaschen zugewandte Führungsfläche berührt die PET-Flaschen während des Transports. Dabei weist diese die PET-Flaschen berührende Führungsfläche ein Polymermaterial auf, das bei 23 °C einen größeren E-Modul als PET und bei 100°C einen um weniger als 20% niedrigeren E-Modul besitzt. Durch eine derartige Gestaltung der Führungsflächen kann der Reibwert mit den PET-Behältnissen verringert werden. Dieses Dokument offenbart die Oberbegriffe der Ansprüche 1, 10 und 12.

Insbesondere bei hohen Arbeitsgeschwindigkeiten hat sich jedoch gezeigt, dass es teilweise wünschenswert wäre, diese entsprechenden Reibwerte noch weiter zu verringern.

Der vorliegenden Erfindung liegt daher die Aufgabe zugrunde, eine Transporteinrichtung für Behältnisse im Rahmen einer Behandlungsanlage für Behältnisse zur Verfügung zu stellen, die auch bei sensiblen bzw. leichten Kunststoffflaschen einen sicheren und störungsfreien Transport dieser Kunststoffbehältnisse erleichtert. Diese Aufgaben werden erfindungsgemäß durch die Gegenstände der unabhängigen Ansprüche erreicht.

Vorteilhafte Ausführungsformen und Weiterbildungen sind Gegenstand der Unteransprüche.

Eine erfindungsgemäße Vorrichtung zum Behandeln von Kunststoffbehältnissen weist eine Transporteinrichtung auf, welche das Behältnis entlang eines vorgegebenen Transportpfads transportiert sowie eine Führungseinrichtung, welche die Behältnisse wenigstens abschnittsweise während ihrer Bewegung entlang des Transportpfades führt, wobei diese Führungseinrichtung derart angeordnet ist, dass die Behältnisse wenigstens zeitweise eine Führungsfläche dieser Führungseinrichtung kontaktieren und sich gegenüber dieser Führungsfläche insbesondere gleitend bewegen. Dabei weist die Führungseinrichtung wenigstens an der den Behältnissen zuwandten Führungsfläche einen Kunststoff auf.

Erfindungsgemäß weist die den Behältnissen zugewandte Führungsfläche der Führungseinrichtung einen durch Einwirkung von Strahlen vernetzten Kunststoff auf. Insbesondere kontaktiert eine Aussenoberfläche der Behältnisse die Führungseinrichtung. Bevorzugt wurde die Führungseinrichtung bzw. der Kunststoff der Führungseinrichtung mit Strahlen bestrahlt, welche eine (Quanten-) energie von mehr als 100 keV, bevorzugt von mehr als 150keV aufweisen. Dabei ist es möglich, dass zunächst ein Kunststoffmaterial bestrahlt wird und anschließend aus diesem bestrahlten Kunststoffmaterial die einzelnen Führungseinrichtungen erzeugt werden. Es wäre jedoch auch möglich, dass zunächst die Führungseinrichtung erzeugt wird und diese anschließend (zumindest abschnittsweise) bestrahlt wird. Vorteilhaft handelt es sich bei der Führungseinrichtung um eine stationär angeordnete Führungseinrichtung.

Bei dem Behandeln der Kunststoffvorformlinge kann es sich um eine Behandlung handeln, welche aus einer Gruppe von Behandlungen ausgewählt ist, welche ein Blasformen von Kunststoffvorformlingen zu Behältnissen, ein Erwärmen von Kunststoffbehältnissen, Ein Kühlen von Kunststoffbehältnissen, ein Sterilisieren von Kunststoffbehältnissen, ein Reinigen von Kunststoffbehältnissen, ein Befüllen von Kunststoffbehältnissen, ein Verschließen von Kunststoffbehältnissen, ein Etikettieren von Kunststoffbehältnissen und/oder ein Transportieren von Kunststoffbehältnissen oder dergleichen enthält.

Die Anmelderin hat herausgefunden, dass derartig strahlenvernetzte Kunststoffe eine wesentlich verbesserte Eigenschaft, insbesondere hinsichtlich der Reibeigenschaften haben. Ein derartiges Bestrahlen von Kunststoffmaterialien ist bereits seit längerem bekannt. Ursprünglich war nach einem geeigneten Isolationsmaterial für Kabel gesucht worden. Dabei wurde herausgefunden, dass eine Bestrahlung bestimmter Kunststoffe durch Strahlung eine Vernetzung des Kunststoffes induziert und daneben auch eine Degradation von Polymeren. Unter einer Vernetzung wurde ursprünglich eine Reaktion verstanden, bei der eine Vielzahl einzelner Makromoleküle zu einem dreidimensionalen Netz verknüpft wird. Dabei verändern sich die Eigenschaften des Materials. Ziel ist es, dabei beispielsweise Polymerwerkstoffen eine größere Härte oder auch Temperaturbeständigkeit zu verleihen.

Unter Kunststoffbehältnissen werden neben den eigentlichen Grundkörpern wie etwa Flaschen auch deren Zubehörteile wie insbesondere deren Verschlüsse verstanden. Die Erfindung ist daher ebenfalls auf eine Transporteinrichtung zum Transportieren von Behältnisverschlüssen anwendbar wie etwa Rinnen, in denen die Verschlüsse gleiten können oder auch Transportscheiben für Behältnisverschlüsse. Auch ist die Erfindung auf Gebinde aus mehreren Behältnissen anwendbar oder auch auf Vorrichtungen, welche etwa Getränkekisten tranportieren. Allgemein ist daher die Erfindung auf Transporteinrichtungen zum Transportieren von Stückgut anwendbar, wobei dieses Stückgut die Bewegung dieses Stückguts führt.

Vorteilhaft wird bei der Strahlenbehandlung eine genau ermittelte Energiemenge in den Kunststoff eingebracht, wobei beispielsweise Elektronenbeschleuniger unterschiedlicher Leistung (für Beta-Strahlen) oder auch eine Kobalt-60 Quelle (für Gamma-Strahlen) eingesetzt werden kann.

Die Anmelderin hat festgestellt, dass auch diese Einwirkung ionisierender Strahlung für die Behandlung mit Lebensmitteln unbedenklich ist, da durch ionisierende Strahlung in Kunststoffen selbst keine Radioaktivität erzeugt wird.

Bei einer vorteilhaften Ausführungsform weist die Führungseinrichtung einen Träger auf, der beispielsweise aus rostfreien Stahl oder Aluminium bestehen kann. An diesem Träger ist das oben beschriebene strahlenbehandelte Kunststoffelement angeordnet. Daneben wäre es jedoch auch möglich, dass das Führungselement selbst ein Befestigungselement zum Anordnen an einen Träger, wie etwa eine Schiene oder dergleichen, aufweisen kann.

Bei den Kunststoffbehältnissen handelt es sich insbesondere um PET-Behältnisse. Bevorzugt handelt es sich bei der Strahlenbehandlung der Kunststoffe insbesondere um ein Vernetzen dieser Kunststoffe durch Gamma- und/oder Beta-Strahlen. Vorteilhaft weist daher zumindest die den Behältnissen zugewandte Führungsfläche einen durch Strahlung behandelt Kunststoff auf. Bei einer weiteren vorteilhaften Ausführungsform ist die Führungseinrichtung aus wenigstens zwei Komponenten aufgebaut.

Ein wesentlicher Unterschied zwischen diesen beiden Strahlungsarten besteht in der Durchdringungsfähigkeit und der Dosisleistung. In Anlagen mit Elektronenbeschleunigern wird mit hohen Dosisleistungen gearbeitet, aber mit einer von der Energie abhängigen beschränkten Eindringtiefe. Durch die mittlerweile verfügbaren Beschleunigeranlagen mit hoher Elektronenenergie können auch größere Bauteile mit Elektronen "durchstrahlt" werden.

Gamma-Strahlen hingegen weisen eine hohe Durchdringungsfähigkeit bei einer relativ geringen Dosisleistung auf. Anwendungstechnisch bedeutet dies, dass in den Elektronenbeschleunigern die Dosis innerhalb von Sekunden auf das Strahlgut aufgebracht wird, während dafür in einer Gamma-Anlage mehrere Stunden benötigt werden.

Insbesondere bei kompakt aufgebauten Formteilen können wiederum Gamma-Strahlen einen größeren Vorteil aufweisen. Vorteilhaft werden bei Bestrahlung des Materials Elektronenstrahlen eingesetzt.

Bei einer vorteilhaften Ausführungsform weist zumindest die den Behältnissen zugewandte Führungsfläche der Führungseinrichtung einen durch Einwirkung von Gamma- und/oder Beta-Strahlung behandelten Kunststoff auf. Dies bedeutet, dass nicht notwendigerweise das gesamte Führungselement bestrahlt sein muss, jedenfalls jedoch im Wesentlichen diejenige Oberfläche, welche später mit dem Kunststoffbehältnis in Berührung kommt.

Erfindungsgemäß weist die oben erwähnte, den Behältnissen zugewandte Führungsfläche ein durch die besagte Strahlung vernetztes Material auf.

Bei einer weiteren vorteilhaften Ausführungsform ist die Führungseinrichtung von der Strahlung durchstrahlt. Vorteilhaft besteht die Führungseinrichtung aus einem homogenen Material, welches bevorzugt außen wie innen gleich aufgebaut ist.

Bei der Durchdringung eines Polymers werden im Falle von Elektronenbestrahlung diese Elektronen abgebremst und geben über eine Kaskade an Sekundärelektronen Bewegungsenergie an das Material ab. Daraufhin brechen die Makromoleküle statistisch in Radikale auf, die die Vernetzung mit weiteren Makromolekülen bewirken. So können sich beispielsweise Kunststoffpolyethylen (PE) oder Polyamid (PA) unmittelbar in Stoffe mit verbesserter Wärmeformbeständigkeit bei höheren Gebrauchstemperaturen verwandeln. Daneben konnte jedoch auch festgestellt werden, dass die Abriebsfestigkeit sich erhöht, was insbesondere im Rahmen der vorliegenden Aufgabenstellung bedeutsam ist.

Im Rahmen des Herstellungsprozesses ist es möglich, die so bestrahlten Kunststoffteile unmittelbar nach deren Bestrahlung weiterzuverarbeiten.

Vorzugsweise kann auch ein bereits durch andere Materialien verstärkter Kunststoff verwendet werden; beispielsweise ein Kunststoff, der bereits mit Glasfasern oder Funktionsadditiven versetzt wurde. Die Strahlenvernetzung ist unabhängig von derartigen Verstärkungsmitteln.

Bei einer weiteren vorteilhaften Ausführungsform ist das Material aus einer Gruppe ausgewählt, welche Polyethylen (PE), Polyether/Etherketonen (PEEK), Polyoxymethylen (POM), und insbesondere Ulta-High-Molecular-Weight-Polyethylen (UHMW-PE), PP (Polypropylen), PA (Polyamid) - insbesondere PA46, PA6, PA6.6, PA11 oder PA12 - , PBT (Polybutyletherphthalat, PMP (Polymethylpenten) und dergleichen enthält. Daneben können auch Kombinationen aus diesen Materialien eingesetzt werden.

Vorteilhaft ist dem strahlenvernetzten Material der Führungseinrichtung wenigstens eine weitere Komponente und insbesondere ein weiteres Material zugesetzt. Vorteilhaft bewirkt die Zusetzung dieses weiteren Materials eine Verbesserung der Gleiteigenschaften der Führungseinrichtung. Bei einer weiteren vorteilhaften Ausführungsform handelt es sich bei der weiteren Komponente um eine kohlenstoffbasierte Komponente und insbesondere um Graphit.

Daneben können auch Komponenten wie CFK (Carbon Faserverstärkter Kunststoff) oder GFK (glasfaserverstärkter Kunststoff) zum Einsatz kommen.

Bei einer weiteren vorteilhaften Ausführungsform ist dem Material der Führungseinrichtung eine weitere Komponente zugesetzt, um die Vernetzung zu fördern. Verteilhaft ist diese weitere Komponente in einem Resin zugesetzt. Vorteilhaft handelt es sich bei dieser weiteren Komponente um einen Vernetzungsverstärker.

Vorteilhaft weist die Vorrichtung eine Gassenführung für das zu transportierende Stückgut, wie beispielsweise Behältnisse oder Behältnispackungen, auf. Das erfindungsgemäße Material kann dabei bei Seitenführungen von Luft-, Flaschen- und Gebindetransporteuren vorhanden sein und besteht bevorzugt aus vernetztem UHMW-PE.

Insbesondere durch das Vernetzen der UHMW-PE-Profile kann die oben erwähnte Problematik des Anhaftens von Behältnissen verbessert oder sogar verhindert werden. Beim Vernetzen werden die Profile insbesondere Gamma- oder Beta-Strahlen ausgesetzt. Wie oben erwähnt, werden durch diese Behandlungen der Führung bzw. der Profile die Molekülketten vernetzt bzw. verschweißt. Ein Ankleben der Behältnisse an diese Führungseinrichtungen bzw. Profile wird damit erschwert bzw. verhindert. Wie von der Anmelderin in Versuchen ermittelt werden konnte, bleibt trotz Bestrahlung eine gute Gleiteigenschaft der UHMW-PE-Profile erhalten.

Bei einer weiteren vorteilhaften Ausführungsform weist das Material der Führungseinrichtung einen vorgegebenen Gelanteil auf. Zum Nachweis der Vernetzung kann der Vernetzungsgrad (auch genannt Gelanteil) verwendet werden. Die Ermittlung dieses Gelanteils erfolgt in Anlehnung an die DIN 16892/120 durch Kochen über mehrere Stunden in einem geeigneten Lösungsmittel (z. Bsp. Ameisensäure). Es wird dabei gravimetrisch bestimmt, wie hoch die Masse des vernetzten Materials im Verhältnis zur Gesamtmasse ist. Ebenso ist für praktische Schnelltests ein Lötkolbentest nach Vorgabe PTS üblich. Vorteilhaft liegt der Gelanteil bzw. der Vernetzungsgrad über 10%, bevorzugt über 30%, und besonders bevorzugt über 50%.

Bei einer weiteren vorteilhaften Ausführungsform weist die Vorrichtung eine Einrichtung zum Einfüllen von Flüssigkeiten in Behältnisse auf. Die hier beschriebene Transporteinrichtung fördert Behältnisse zu dieser Einrichtung zum Füllen von Flüssigkeiten hin oder von dieser weg.

Bei einer weiteren vorteilhaften Ausführungsform ist die Führungseinrichtung eine Seitenführungseinrichtung, welche die Behältnisse wenigstens zeitweise an wenigstens einem Abschnitt deren Seitenwandung kontaktiert. Insbesondere durch Behandlung mit Strahlen kann die Gleiteigenschaft verbessert werden.

Bei einer weiteren vorteilhaften Ausführungsform ist in das Material der Führungseinrichtung wenigstens abschnittsweise eine Vielzahl von zusätzlichen Körpern, insbesondere von im Wesentlichen kugelförmigen Körpern, eingearbeitet. So ist es möglich, dass die Oberflächenstruktur des Materials durch eine Vielzahl von kugelförmigen Elementen gebildet wird oder eine solche aufweist, die in einem Grundmaterial und/oder Trägermaterial der Führungseinrichtung oder eines Führungseinsatzes eingebettet sind. Vorteilhaft sind dabei diese Elemente, insbesondere kugelförmigen Elemente, aus einem Material hergestellt, welches aus einer Gruppe von Materialien ausgewählt ist, welche Glas- oder Keramikkugeln und dergleichen, vorzugsweise unipolare Füllstoffe, enthält.

Vorteilhaft weisen dabei diese zusätzlichen Körper, beispielsweise kugelförmigen Körper jeweils Querschnitte, bzw. Volumina auf, die einen Durchmesser kleiner 1 mm, vorzugsweise kleiner 0,1 mm und besonders vorzugsweise kleiner 0,01 mm aufweisen.

Vorteilhaft beträgt ein Gewichtsanteil dieser kugelförmigen Körper gegenüber dem Gesamtmaterial mehr als 5 %, vorzugsweise mehr als 10 % und besonders vorzugsweise mehr als 20%.

Die vorliegende Erfindung ist weiterhin auf eine Führungseinrichtung zum Führen von Behältnissen, insbesondere für eine Vorrichtung der oben beschriebenen Art gerichtet. Dabei weist diese Führungseinrichtung eine Führungsfläche auf, der gegenüber die Kunststoffbehältnisse - insbesondere gleitend - bewegbar sind. Weiterhin weist die Führungseinrichtung wenigstens an der den Behältnissen zugewandten Führungsfläche einen Kunststoff auf. Es wäre jedoch auch denkbar, dass die Behältnisse gegenüber den Führungseinrichtungen (ab)rollen.

Erfindungsgemäß weist zumindest die den Behältnissen zugewandte Führungsfläche einen durch Einwirkung von Strahlen vernetzten Kunststoff auf.

Vorteilhaft ist die Führungseinrichtung durch einen Extrusionsvorgang hergestellt und anschließend strahlenvernetzt.

Bevorzugt ist die Führungseinrichtung aus einer Gruppe von Führungseinrichtungen ausgewählt, welche Seitenführungselemente, Transportschnecken, Gleitleisten, insbesondere für einen Lufttransport der Behältnisse, Greifelemente zum Greifen der Kunststoffbehältnisse, Klammerelemente zum Klammern der Kunststoffbehältnisse und dergleichen enthält. Die Führungseinrichtung kann daher eine Aussenwand der Behältnisse, einen Tragring der Behältnisse, ein Gewinde der Behältnisse und/oder einen Boden der Behältnisse kontaktieren. Auch bei den Greifelementen und Klammerelementen handelt es sich hier um Führungseinrichtungen im Sinne der Erfindung, da sich diese zumindest während der Zustellung auf die Behältnisse diesen gegenüber bewegen. Bei diesen Greifelementen, welche bevorzugt geeignet sind, die Kunststoffbehältnisse an ihren Mündungen zu greifen, stehen jedoch weniger die Gleiteigenschaften im Vordergrund als mehr die Stabilität und Härte des Materials, bzw. insbesondere eine Reißfestigkeit und Zugbelastbarkeit.

Daneben kann es sich bei der Führungseinrichtung jedoch auch um eine solche Führungseinrichtung handeln, welche die Behältnisse nicht unmittelbar berührt, welche jedoch bevorzugt weitere Elemente berührt, welche wiederum in Kontakt mit den Behältnissen stehen. Bei der den Behältnissen zugewandten Oberfläche handelt es sich bevorzugt um diejenige Oberfläche, welche (wenigstens zeitweise) geometrisch auf die Behältnisse zuweist. Beispiele für derartige Führungseinrichtungen sind etwa Gleitleisten unter einer Transportkette, Kettenräder (für eine Transportkette) oder Umlenkräder. Daneben kann es sich auch um Bestandteile von Führungskurven handeln, insbesondere um Kurvenoberteile oder Kurvenunterteile, um Kettenführungen für Rollenketten oder auch, wie oben erwähnt um Klammerteile von Transportsternen.

Im letztgenannten Fall kann es sich bei der Transporteinrichtung beispielsweise um einen Transportstern handeln. Dabei können derartige Transportsterne einen drehbaren Grundkörper aufweisen, an dem mehrere insbesondere steuerbare Greifelemente angeordnet sind. Bevorzugt weist dabei jedes dieser Greifelemente wenigstens zwei insbesondere einarmige Greifhebel auf, die bevorzugt an ihren radial inneren Enden mit dem Grundkörper verbunden sind. Dabei ist es möglich, dass diese Greifhebel in eine Öffnungsstellung elastisch vorgespannt sind. Dabei können weiterhin Steuernocken (die ggfs. ebenfalls aus einem strahlenvernetzten Kunststoff bestehen) vorgesehen sein, welche an den voneinander wegweisenden Außenflächen von zusammengehörigen Greifelementen angreifen. Diese Steuernocken können dabei bevorzugt synchron verstellbar, insbesondere verdrehbar sein.

Allgemein können die hier beschriebenen Materialien insbesondere für solche Elemente einer Behältnisbehandlungsanlage zum Einsatz kommen, gegenüber denen sich die Behältnisse wenigstens zeitweise bewegen. Die hier beschriebene Verbesserung der Gleiteigenschaften ist besonders relevant bei solchen Elementen, denen gegenüber andere Elemente sich bewegen. Die Anmelderin behält sich daher vor, Schutz zu beanspruchen, für eine Behältnisbehandlungsanlage, welche eine Einrichtung zum Transportieren von Behältnissen aufweist, sowie wenigstens ein Element, welches bevorzugt zumindest an dieser Transportbewegung der Behältnisse unmittelbar oder mittelbar beteiligt ist, und dem gegenüber sich die Behältnisse zumindest zeitweise bewegen.

Die vorliegende Erfindung ist weiterhin auf ein Verfahren zum Behandeln von Kunststoffbehältnissen gerichtet, wobei die Kunststoffbehältnisse mittels einer Transporteinrichtung entlang eines vorgegebenen Transportpfades transportiert werden und wobei die Kunststoffbehältnisse wenigstens zeitweise während dieses Transports von einer einen Kunststoff aufweisenden Führungseinrichtung geführt werden. Dabei kontaktiert wenigstens eine Außenfläche der Kunststoffbehältnisse wenigstens zeitweise eine Führungsfläche der Führungseinrichtung.

Erfindungsgemäß weist zumindest die den Behältnissen zugewandte Führungsfläche der Führungseinrichtung einen durch Einwirkung von Strahlen vernetzten Kunststoff auf. Insbesondere handelt es sich dabei um einen Kunststoff, der durch Beta- oder Gamma-Strahlen bestrahlt wurde.

Weitere Vorteile und Ausführungsformen ergeben sich aus den beigefügten Zeichnungen:
Darin zeigen:
   - Fig. 1: Eine schematische Darstellung einer erfindungsgemäßen Vorrichtung;
   - Fig. 2: eine schematische Darstellung einer Führungseinrichtung;
   - Fig. 3: eine Detaildarstellung einer erfindungsgemäßen Führungseinrichtung;
   - Fig. 4: eine weitere Darstellung einer Führungseinrichtung;
   - Fig. 5: eine Darstellung einer Halteeinrichtung für eine Führungseinrichtung;
   - Fig. 6: eine weitere Darstellung einer erfindungsgemäßen Führungseinrichtung;
   - Fig. 7: eine Führungseinrichtung in einer weiteren Ausführungsform;
   - Fig. 8a, 8b: zwei Darstellungen eines Materials in einer bevorzugten Ausführungsform; und
   - Fig. 9a, 9b: zwei Darstellungen eines Materials in einer zweiten Ausführungsform.

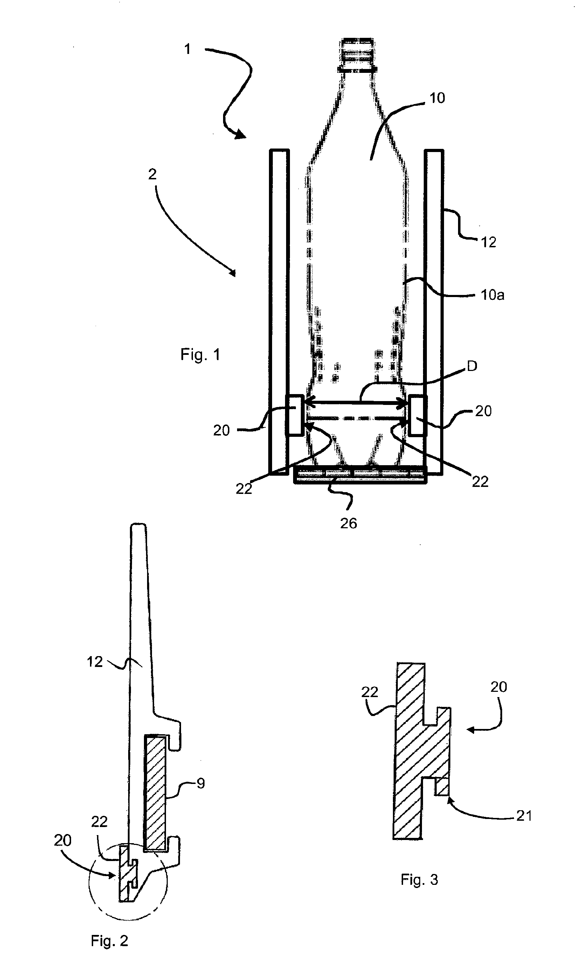

Fig. 1 zeigt eine schematische Darstellung einer erfindungsgemäßen Vorrichtung 1 zum Behandeln von Kunststoffbehältnissen. Genauer gesagt ist hier eine Transporteinrichtung 2 zum Transportieren von Behältnissen 10 dargestellt. Diese Behältnisse 10 weisen eine Seitenwand 10a auf. Dabei können hier beispielsweise die Behältnisse 10, bei denen es sich insbesondere um PET - Flaschen handelt, hintereinander transportiert werden. Bei der in Fig. 1 gezeigten Ausgestaltung ist ein einbahniger Transport dieser Behältnisse 10 vorgesehen. Diese Behältnisse werden dabei hier auf einem mit 26 bezeichneten Transportband transportiert. Seitlich sind jeweils Geländer bzw. Träger 12 vorgesehen, zwischen denen das Behältnis 10 geführt wird. An diesen Geländern 12 sind Führungseinsätze bzw. Führungseinrichtungen 20 angeordnet, deren Führungsflächen 22 die Behältnisse 10 berühren. Diese beiden Führungseinrichtungen 20 bilden damit hier eine Gasse aus, in der Behältnisse 10 geführt werden.

In bestimmten Anwendungen kann es auch ausreichend sein, dass lediglich eine der beiden Führungseinrichtungen 20, d.h. nur auf einer Seite vorgesehen ist. Die Führungseinrichtungen 12 verhindern hier, dass die Behältnisse von dem Transportband 26 herabfallen können. Die in Fig. 1 gezeigte Erfindung wäre jedoch auch bei anderen Vorrichtungen einsetzbar, etwa bei solchen Anwendungen, bei denen (befüllte oder leere) Behältnisse an ihren Tragring hängend transportiert werden. Das Bezugszeichen 10a bezieht sich auf eine Außenwandung der Behältnisse. Das Bezugszeichen D kennzeichnet einen Abstand der beiden Führungseinrichtungen bzw. einen Abstand deren beider Führungsflächen 22. Dieser Abstand ist hier an einen Durchmesser des Behältnisses angepasst bzw. geringfügig größer als dieser gewählt.

Fig. 2 zeigt eine mögliche Darstellung einer Führungseinrichtung 20, die hier an einem Träger 12 angeordnet ist. Dabei kann auch ein Tragelement 9 vorgesehen sein, welches wiederum den Träger 12 hält. Dieses Tragelement kann auch zur mechanischen Stabilisierung des Trägers 12 dienen. Dabei ist es möglich, dass dieses Trageelement elastisch ausgebildet ist.

Fig. 3 zeigt eine vergrößerte Darstellung der Führungseinrichtung 20. Dabei kennzeichnet das Bezugszeichen 22 die Führungsfläche, welche den Behältnissen zugewandt ist. Insbesondere im Bereich dieser Führungsfläche 22 ist das Kunststoffmaterial der Führungseinrichtung 20 aus einem strahlenvernetzten Kunststoff hergestellt. Das Bezugszeichen 21 kennzeichnet eine Halteeinrichtung bzw. eine Montagestruktur, mit der die Führungseinrichtung 20 an dem Träger 12 angeordnet, beispielsweise in diesen eingeschoben werden kann.

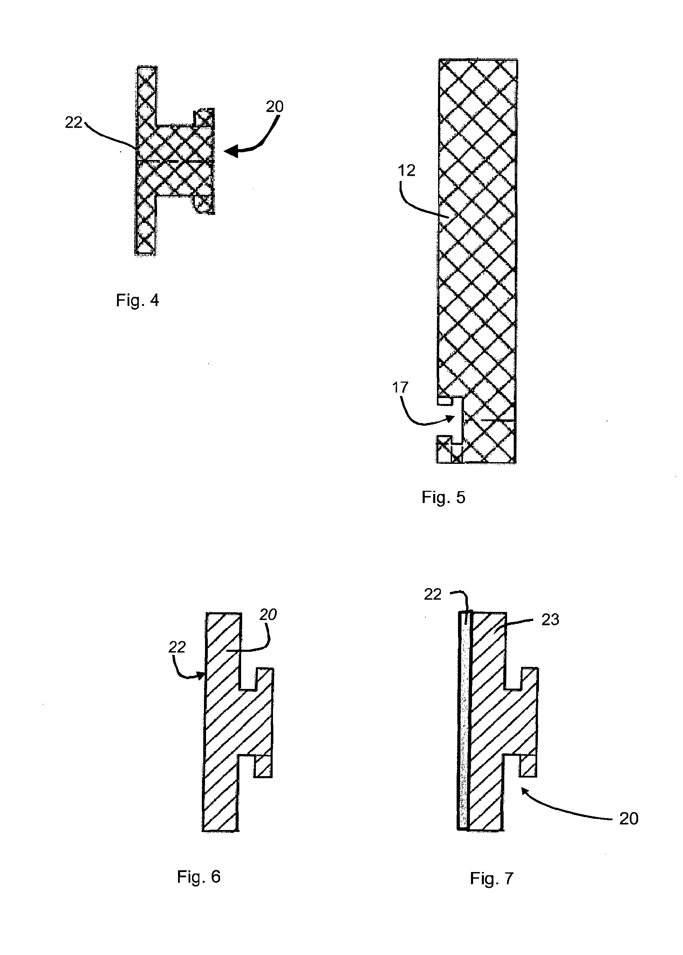

Die Figuren 4 und 5 zeigen eine weitere Ausführungsform einer Führungseinrichtung 20. In diesem Fall ist der Träger 12 als Platte ausgeführt, in der eine Ausnehmung bzw. Negativform 17 für die Aufnahme der Halteeinrichtung 21 der Führungseinrichtung 20 vorgesehen ist.

Fig. 6 zeigt eine weitere Ausführungsform der Führungseinrichtung mit der Führungsfläche 22. Hier ist die gesamt Führungsfläche 22 aus einen einheitlichen Material, wie insbesondere UHMW-PE ausgebildet. Damit liegt dieses Material auch an der Führungsfläche 22, welche die Behältnisse kontaktiert, vor.

Bei der in Fig. 7 gezeigten Ausführungsform ist die Führungseinrichtung 20 zweiteilig ausgebildet und weist einen Grundkörper 23 auf, an dem die Führungsfläche 22 als Schicht bzw. Beschichtung 22 angeordnet ist. Auf diese Weise können die Kosten reduziert werden, da für den Grundkörper 23 ein kostengünstigeres Material verwendet werden kann. Dabei ist es möglich, dass lediglich die Führungsfläche 22 aus einem bestrahlten Kunststoff besteht.

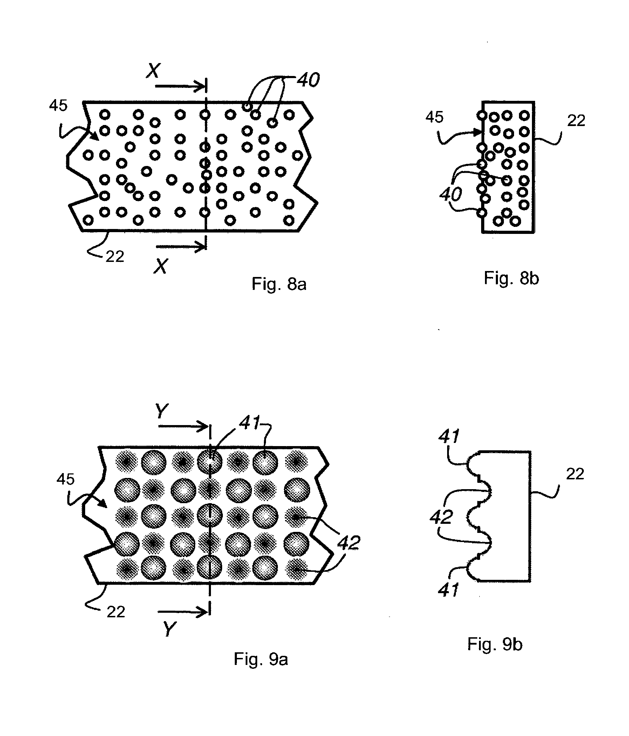

Die Figuren 8a, 8b zeigen eine weitere Ausgestaltung eines erfindungsgemäßen Materials. Hier ist in den Grundkörper 45 des Materials eine Vielzahl von hier im Wesentlichen kugelförmigen Körpern 40 eingebettet. Fig. 8b zeigt eine Ansicht des Körpers aus Fig. 8a entlang der Pfeile X-X aus Fig. 8. Man erkennt, dass hier durch diese einzelnen kugelförmigen Körper 40 eine Kontaktfläche ausgebildet ist. Die Erhöhungen, die durch die kugelförmigen Körper 40 verursacht werden, sind hier halbkugelförmig dargestellt, die Erfindung ist jedoch nicht hierauf beschränkt. Insgesamt entsteht jedoch auf diese Weise eine hügelige Führungsfläche und es konnte gezeigt werden, dass diese hügelige Führungsfläche den Reibwert der Führungseinrichtung bzw. der Führungsfläche 22 herabsenkt.

Allgemein ist bevorzugt dieses Einbetten der kugelförmigen Körper auch mit einer Strahlvernetzung des Kunststoffmaterials kombiniert. Daneben können auch zusätzliche Verstärkungselemente vorgesehen sein, die das Material des Kunststoffes insgesamt verstärken.

Die Figuren 9a, 9b zeigen eine weitere Ausführungsform, bei welcher in dem Material Erhöhungen 49 und/oder Vertiefungen 42 vorgesehen sind. Dabei können diese Erhöhungen und Vertiefungen auch als gleichmäßige Rillen oder Nuten oder mit einer anderen Profilierung vorgesehen sein. Insgesamt wird hierdurch erreicht, dass die resultierende Führungsfläche der Führungseinrichtung bzw. Führungsfläche 22 eine insgesamt geringere Anlagefläche im Kontaktbereich mit den Kunststoffbehältnissen aufweist.

### Bezugszeichenliste

- 1: Vorrichtung
- 2: Transporteinrichtung
- 9: Trageelement
- 10: Behältnisse
- 10a: Seitenwandung
- 12: Träger
- 17: Ausnehmung
- 20: Führungseinrichtungen
- 21: Halteeinrichtung
- 22: Führungsfläche
- 23: Grundkörper
- 26: Transportband
- 40: kugelförmiger Körper
- 41: Erhöhungen im Material
- 42: Vertiefungen im Material
- 45: Grundkörper des Materials
- D: Abstand

## Patentansprüche

1. Vorrichtung (1) zum Behandeln von Kunststoffbehältnissen (10) mit einer Transporteinrichtung (2), welche die Behältnisse (10) entlang eines vorgegebenen Transportpfads transportiert und mit einer Führungseinrichtung (20), welche die Behältnisse (10) wenigstens abschnittsweise während ihrer Bewegung entlang des Transportpfades führt, wobei diese Führungseinrichtung (20) derart angeordnet ist, dass die Behältnisse (10) wenigstens zeitweise eine Führungsfläche (22) dieser Führungseinrichtung (20) kontaktieren und sich gegenüber dieser Führungsfläche (22) - insbesondere gleitend - bewegen, wobei die Führungseinrichtung (20) wenigstens an der den Behältnissen (10) zugewandten Führungsfläche (22) einen Kunststoff aufweist,
**dadurch gekennzeichnet, dass**
die den Behältnissen (10) zugewandte Führungsfläche (22) der Führungseinrichtung (20) einen durch Einwirkung von Strahlen vernetzten Kunststoff aufweist.

2. Vorrichtung (1) nach Anspruch 1,
**dadurch gekennzeichnet, dass**
zumindest die den Behältnissen (10) zugewandte Führungsfläche (22) der Führungseinrichtung (20) einen durch Einwirkung von Gamma- oder Betastrahlung behandelten Kunststoff aufweist.

3. Vorrichtung (1) nach Anspruch 2,
**dadurch gekennzeichnet, dass**
die Führungseinrichtung (20) von der Strahlung durchstrahlt ist.

4. Vorrichtung (1) nach Anspruch 1,
**dadurch gekennzeichnet, dass**
der Kunststoff aus einer Gruppe ausgewählt ist, welche PE, PEEK, POM, UHMW-PE, PP, PA - insbesondere PA46, PA6, PA6.6, PA11 oder PA12 - , PBT, PMP, Kombinationen hieraus und dergleichen enthält.

5. Vorrichtung (1) nach Anspruch 1,
**dadurch gekennzeichnet, dass**
das Material der Führungseinrichtung einen vorgegebenen Gelanteil aufweist.

6. Vorrichtung nach Anspruch 5,
**dadurch gekennzeichnet, dass**
der Gelanteil über 10%, bevorzugt über 30%, und besonders bevorzugt über 50% liegt.

7. Vorrichtung (1) nach wenigstens einem der vorangegangenen Ansprüche,
**dadurch gekennzeichnet, dass**
die Vorrichtung (1) eine Einrichtung zum Einfüllen von Flüssigkeiten in Behältnisse aufweist.

8. Vorrichtung (1) nach wenigstens einem der vorangegangenen Ansprüche,
**dadurch gekennzeichnet, dass**
die Führungseinrichtung (20) eine Seitenführungseinrichtung (20) ist, welche die Behältnisse (10) wenigstens zeitweise an wenigstens einem Abschnitt deren Seitenwandung kontaktiert.

9. Vorrichtung (1) nach wenigstens einem der vorangegangenen Ansprüche,
**dadurch gekennzeichnet, dass**
in das Material der Führungseinrichtung (20) wenigstens abschnittsweise eine Vielzahl von im wesentlichen kugelförmigen Elementen (40) eingearbeitet ist.

10. Führungseinrichtung (20) zum Führen von Behältnissen (10), insbesondere für eine Vorrichtung (1) nach wenigstens einem der vorangegangenen Ansprüche, wobei diese Führungseinrichtung (20) eine Führungsfläche (22) aufweist, der gegenüber die Kunststoffbehältnisse (10) gleitend bewegbar sind und wobei die Führungseinrichtung (20) wenigstens an der den Behältnissen zugewandten Führungsfläche (22) einen Kunststoff aufweist,
**dadurch gekennzeichnet, dass**
zumindest die den Behältnissen (10) zugewandte Führungsfläche (22) einen durch Einwirkung von Strahlen vernetzten Kunststoff aufweist.

11. Führungseinrichtung (20) nach Anspruch 10,
**dadurch gekennzeichnet, dass**
die Führungseinrichtung (20) aus einer Gruppe von Führungseinrichtungen ausgewählt ist, welche Seitenführungselemente, Transportschnecken, Gleitleisten, insbesondere für einen Lufttransport der Behältnisse (10), Greifelemente zum Greifen der Kunststoffbehältnisse, Klammerelemente zum Klammern der Kunststoffbehältnisse und dergleichen enthält.

12. Verfahren zum Behandeln von Kunststoffbehältnissen (10), wobei die Kunststoffbehältnisse (10) mittels einer Transporteinrichtung (2) entlang eines vorgegebenen Transportpfades transportiert werden und wobei die Kunststoffbehältnisse (10) wenigstens zeitweise während dieses Transports von einer einen Kunststoff aufweisenden Führungseinrichtung (20) geführt werden, wobei wenigstens eine Aussenfläche der Kunststoffbehältnisse (10) wenigstens zeitweise eine Führungsfläche (22) der Führungseinrichtung (20) kontaktiert,
**dadurch gekennzeichnet**
die den Behältnissen (10) zugewandte Führungsfläche (22) der Führungseinrichtung (20) einen durch Einwirkung von Strahlen vernetzten Kunststoff aufweist.

## Claims

1. An apparatus (1) for the treatment of plastics material containers (10) with a conveying device (2) which conveys the containers (10) along a pre-set conveying path and with a guide device (20) which guides the containers (10) at least in sections during the movement thereof along the conveying path, wherein this guide device (20) is arranged in such a way that the containers (10) contact a guide face (22) of this guide device (20) at least for a time and move - in particular in a sliding manner - with respect to this guide face (22), wherein the guide device (20) has a plastics material at least on the guide face (22) towards the containers (10), **characterized in that** the guide face (22) of the guide device (20) towards the containers (10) has a plastics material cross-linked by the action of radiation.

2. An apparatus (1) according to claim 1, **characterized in that** at least the guide face (22) of the guide device (20) towards the containers (10) has a plastics material treated by the action of gamma or beta radiation.

3. An apparatus (1) according to claim 2, **characterized in that** the guide device (20) has the radiation pass through it.

4. An apparatus (1) according to claim 1, **characterized in that** the plastics material is chosen from a group which contains PE, PEEK, POM, UHMWPE, PP, PA - in particular PA46, PA6, PA6.6, PA11 or PA12 -, PBT, PMP, combinations thereof and the like.

5. An apparatus (1) according to claim 1, **characterized in that** the material of the guide device has a pre-set proportion of gel.

6. An apparatus (1) according to claim 5, **characterized in that** the proportion of gel is over 10 %, preferably over 30 % and in a particularly preferred manner over 50 %.

7. An apparatus (1) according to at least one of the preceding claims, **characterized in that** the apparatus (1) has a device for pouring liquids into containers.

8. An apparatus (1) according to at least one of the preceding claims, **characterized in that** the guide device (20) is a lateral guidance device (20) which contacts the containers (10) at least for a time on at least one portion of their side wall.

9. An apparatus (1) according to at least one of the preceding claims, **characterized in that** a plurality of substantially spherical elements (40) are incorporated at least in sections into the material of the guide device (20).

10. A guide device (20) for the guidance of containers (10), in particular for an apparatus (1) according to at least one of the preceding claims, wherein this guide device (20) has a guide face (22), with respect to which the plastics material containers (10) are capable of being moved in a sliding manner, and wherein the guide device (20) has a plastics material at least on the guide face (22) towards the containers, **characterized in that** at least the guide face (22) towards the containers (10) has a plastics material cross-linked by the action of radiation.

11. A guide device (20) according to claim 10, **characterized in that** the guide device (20) is chosen from a group of guide devices which includes lateral guidance elements, screw conveyors, slide rails, in particular for air conveying of the containers (10), gripping elements for gripping the plastics material containers, clamping elements for clamping the plastics material containers and the like.

12. A method of treating plastics material containers (10), wherein the plastics material containers (10) are conveyed by means of a conveying device (2) along a pre-set conveying path and wherein the plastics material containers (10) are guided at least for a time during this conveying by a guide device (20) which has a plastics material, wherein at least one outer face of the plastics material containers (10) contacts a guide face (22) of the guide device (20) at least for a time, **characterized in that** the guide face (22) of the guide device (20) towards the containers (10) has a plastics material cross-linked by the action of radiation.

## Revendications

1. Installation (1) de traitement de récipients en matière plastique (10), avec un dispositif de transport (2) convoyant les récipients (10) le long d'un chemin de transport défini et avec un dispositif de guidage (20) guidant les récipients (10) au moins en sections pendant leur déplacement le long du chemin de transport, ledit dispositif de guidage (20) étant disposé de telle manière que les récipients (10) entrent en contact au moins temporairement avec une surface de guidage (22) dudit dispositif de guidage (20) et se déplacent par rapport à ladite surface de guidage (22) - en particulier par glissement, le dispositif de guidage (20) présentant une matière plastique au moins sur la surface de guidage (22) opposée aux récipients (10),
**caractérisée en ce que**
la surface de guidage (22) du dispositif de guidage (20) opposée aux récipients (10) présente une matière plastique réticulée sous l'effet de rayons.

2. Installation (1) selon la revendication 1,
**caractérisée en ce qu'**
au moins la surface de guidage (22) du dispositif de guidage (20) opposée aux récipients (10) présente une matière plastique traitée sous l'effet de rayonnement gamma ou bêta.

3. Installation (1) selon la revendication 2,
**caractérisée en ce que**
le rayonnement traverse le dispositif de guidage (20).

4. Installation (1) selon la revendication 1,
**caractérisée en ce que**
la matière plastique est sélectionnée d'un groupe comprenant PE, PEEK, POM, UHMW-PE, PP, PA - en particulier PA46, PA6, PA6.6, PA11 ou PA12 -, PBT, PMP, des combinaisons de ceux-ci et similaires.

5. Installation (1) selon la revendication 1,
**caractérisée en ce que**
le matériau du dispositif de guidage comprend une part de gel définie.

6. Installation selon la revendication 5,
**caractérisée en ce que**
la part de gel est supérieure à 10 %, préférentiellement supérieure à 30 %, et tout particulièrement supérieure à 50 %.

7. Installation (1) selon au moins une des revendications précédentes,
**caractérisée en ce que**
ladite installation (1) comporte un dispositif pour verser des liquides dans les récipients.

8. Installation (1) selon au moins une des revendications précédentes,
**caractérisée en ce que**
le dispositif de guidage (20) est un dispositif de guidage latéral (20) qui entre au moins temporairement en contact avec les récipients (10) sur au moins une partie de leur paroi latérale.

9. Installation (1) selon au moins une des revendications précédentes,
**caractérisée en ce qu'**
une pluralité d'éléments (40) sensiblement sphériques est incorporée au moins partiellement au matériau du dispositif de guidage (20).

10. Dispositif de guidage (20) destiné à guider des récipients (10), en particulier pour une installation (1) selon au moins une des revendications précédentes, ledit dispositif de guidage (20) présentant une surface de guidage (22) par rapport à laquelle les récipients en matière plastique (10) sont déplaçables par glissement, et ledit dispositif de guidage (20) présentant une matière plastique au moins sur la surface de guidage (22) opposée aux récipients,
**caractérisé en ce qu'**
au moins la surface de guidage (22) opposée aux récipients (10) présente une matière plastique réticulée sous l'effet de rayons.

11. Dispositif de guidage (20) selon la revendication 10,
**caractérisé en ce que**
ledit dispositif de guidage (20) est sélectionné d'un groupe de dispositifs de guidage qui comprend des éléments de guidage latéral, vis de transport, baguettes de glissement, en particulier pour un transport pneumatique des récipients (10), des éléments préhenseurs pour la saisie des récipients en matière plastique, des éléments de pince pour la retenue des récipients en matière plastique, et similaires.

12. Procédé de traitement de récipients en matière plastique (10), les récipients en matière plastique (10) étant convoyés le long d'un chemin de transport défini par un dispositif de transport (2), et les récipients en matière plastique (10) étant guidés au moins temporairement pendant ce transport par un dispositif de guidage (20) présentant une matière plastique, au moins une surface extérieure des récipients en matière plastique (10) entrant au moins temporairement en contact avec une surface de guidage (22) du dispositif de guidage (20),
**caractérisé en ce que**
la surface de guidage (22) du dispositif de guidage (20) opposée aux récipients (10) présente une matière plastique réticulée sous l'effet de rayons.
